(19)

Europäisches
Patentamt
European
Patent Office
Office européen
des brevets

(11) **EP 3 031 322 B1**

(12) **EUROPEAN PATENT SPECIFICATION**

(45) Date of publication and mention
of the grant of the patent:
**11.09.2019 Bulletin 2019/37**

(21) Application number: **14850593.6**

(22) Date of filing: **01.10.2014**

(51) Int Cl.:
*A01N 31/02* (2006.01)       *A01N 31/16* (2006.01)
*A01N 33/10* (2006.01)       *A01N 35/02* (2006.01)
*A01N 35/04* (2006.01)       *A01N 37/10* (2006.01)
*A01N 37/40* (2006.01)       *A01N 37/44* (2006.01)
*A01N 43/16* (2006.01)       *A01N 43/40* (2006.01)
*A01N 49/00* (2006.01)       *A01P 19/00* (2006.01)

(86) International application number:
**PCT/JP2014/076287**

(87) International publication number:
**WO 2015/050159 (09.04.2015 Gazette 2015/14)**

(54) **COMPOSITION COMPRISING HARMFUL ARTHROPOD-ATTRACTING SUBSTANCE FORMED FROM PLANT-DERIVED COMPONENTS AND ANALOGS THEREOF**

ZUSAMMENSETZUNG MIT SCHÄDLICHER ARTHROPODEN-ANZIEHENDER SUBSTANZ AUS PFLANZLICHEN KOMPONENTEN UND ANALOGA DAVON

COMPOSITION COMPRENANT UNE SUBSTANCE ATTIRANT LES ARTHROPODES DANGEREUX CRÉÉE À PARTIR DE COMPOSANTS DÉRIVÉS DE PLANTES ET D'ANALOGUES DE CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2013 JP 2013207440**

(43) Date of publication of application:
**15.06.2016 Bulletin 2016/24**

(73) Proprietor: **Kyoyu Agri Co., Ltd.**
**Kawasaki-shi**
**Kanagawa 213-0002 (JP)**

(72) Inventors:
• **KAWAZU, Kei**
**Nagano-shi**
**Nagano 381-0006 (JP)**
• **YAMAMOTO, Eiko**
**Sendai-shi**
**Miyagi 980-0011 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
**EP-A1- 2 572 579**       **WO-A1-2004/028256**
**JP-A- H0 725 706**       **JP-A- S63 264 510**
**JP-A- 2008 515 965**

• **Elisabeth H Koschier ET AL: "Assessing the Attractiveness of Volatile Plant Compounds to Western Flower Thrips Frankliniella occidentalis", Journal of Chemical Ecology, 1 December 2000 (2000-12-01), pages 2643-2655, XP055347500, New York DOI: 10.1023/A:1026470122171 Retrieved from the Internet: URL:http://rd.springer.com/content/pdf/10. 1023/A:1026470122171.pdf**
• **Tamotsu Murai ET AL: "Methyl Anthranilate as an Attractant for Two Thrips Species and the Thrips Parasitoid Ceranisus menes", Journal of Chemical Ecology, 1 November 2000 (2000-11-01), pages 2557-2565, XP055347503, New York DOI: 10.1023/A:1005536713025 Retrieved from the Internet: URL:http://rd.springer.com/content/pdf/10. 1023/A:1005536713025.pdf**

- JAIME C. PIÑERO ET AL: "Synergism between aromatic compounds and green leaf volatiles derived from the host plant underlies female attraction in the oriental fruit moth", ENTOMOLOGIA EXPERIMENTALIS ET APPLICATA., vol. 125, no. 2, 1 November 2007 (2007-11-01), pages 185-194, XP055384001, NL ISSN: 0013-8703, DOI: 10.1111/j.1570-7458.2007.00614.x

- DAVID A. J. TEULON ET AL: "4-Pyridyl Carbonyl and Related Compounds as Thrips Lures: Effectiveness for Onion Thrips and New Zealand Flower Thrips in Field Experiments", JOURNAL OF AGRICULTURAL AND FOOD CHEMISTRY, vol. 55, no. 15, 1 July 2007 (2007-07-01), pages 6198-6205, XP055052294, ISSN: 0021-8561, DOI: 10.1021/jf070389a

**Description**

**Technical Field**

This invention relates to a composition for attracting noxious arthropods, a method for controlling the behavior of noxious arthropod populations through the attraction, and particularly, a method for controlling and forecasting plant damage caused by noxious arthropods.

**Back ground Art**

Damage to cultivated crops by noxious arthropods is becoming a global problem. There are some noxious arthropods that transmit viruses and cause serious damage to crops by inducing viral diseases therein. However, in the case of microscopic noxious arthropods that thrive in closed locations such as buds, detection at low densities and control using agricultural chemicals are difficult. Moreover, reduced control effects due to the appearance of resistance to insecticides and effects on the environment attributable to the use of insecticides are coming to be viewed as problems. Thus, in order to reduce damage to cultivated crops and plants, there is a need for a method for detecting noxious arthropod populations and suppressing the noxious arthropod population density.

Noxious arthropods utilize volatile chemicals produced and released by plants in order to use host plants. Several plant-derived compounds act as attractants of noxious arthropods, and noxious arthropods can be attracted by using a suitable trap with attractant (Patent Document 1; Patent Document 2; Patent Document 9; Patent Document 10; Non Patent Document 1; Non Patent Document 2; Non Patent Document 10; Non Patent Document 11).

A kairomone is defined as a chemical produced by a certain species of organism that is disadvantageous to the species that produces it but has an advantageous effect on another species that receives it. In addition, chemicals produced by plants that attract an herbivore that receives it are also kairomones, and these chemicals are referred to as plant-derived kairomones. Although there are numerous chemicals that have been found to be attractant compounds, aromatic compounds are known to be plant-derived kairomones. Numerous plant kairomones have been reported to be attractants of various types of noxious arthropods. For example, leaf alcohol, esters thereof, methyl isoeugenol and analogue compounds thereof have been clearly determined to be kairomones that attract male and female adult *Anomala cuprea* (Patent Document 1; Patent Document 2), and traps using these chemicals as attractants are used in monitoring tool (method). In addition, a flower aromatic in the form of benzyl acetate and six derivative components thereof have been clearly determined to attract *Cryptomeria twing* (Patent Document 3; Patent Document 4; Patent Document 5), and traps using these chemicals as attractants are already being used in monitoring tool (method).

Plant-derived kairomones have been reported to be attractants of *Thrips.* For example, although p-anisaldehyde, ethyl nicotinate, benzaldehyde, o-anisaldehyde, β-farnesene, eugenol, 3-phenylpropylaldehyde, monoterpenes (such as geraniol, linalool, nerol, citronellol or eucalyptol) and monoterpene esters (such as isobornyl valerate, isobornyl pivalate or lavandulyl valerate) have been reported to be attractants of *Frankliniella occidentalis,* the degree of that attraction varies (Non Patent Document 3; Non Patent Document 4; Non Patent Document 5; Non Patent Document 6; Patent Document 6; Patent Document 7; Patent Document 8).

In addition, ethyl nicotinate and benzaldehyde have been reported to show attractiveness to *Thrips obscuratus,* while anisaldehyde and benzaldehyde have been reported to show attractiveness to *Thrips tabaci.* In addition, although methyl anthranilate and ethyl anthranilate have been reported to attract *Thrips hawaiiensis* and *Thrips coloratus,* they have been reported to not attract *Frankliniella occidentalis* or *Thrips tabaci* (Non Patent Document 3; Non Patent Document 7; Non Patent Document 9). Analogues of plant-derived kairomones refer to compounds that show kairomone-like activity but are not derived from plants. For example, ethyl nicotinate and methyl m-aminobenzoate are analogues of plant-derived compounds in the form of methyl nicotinate and methyl o-aminobenzoate, respectively, and although they are not plant-derived compounds, they have been reported to be attractants of *Thrips* (Non Patent Document 3; Non Patent Document 5; Non Patent Document 7; Non Patent Document 8).

In addition to plant-derived aromatic compounds, synthetic pyridine derivative compounds (methyl isonicotinate, ethyl isonicotinate, propyl isonicotinate, isopropyl isonicotinate, decyl isonicotinate, ethyl 2-chloroisonicotinate, 4-(1,3-dioxolan-2-yl) pyridine, di-isopropyl isonicotinamide, 4-formyl pyridine, methyl 4-pyridyl ketone, ethyl 4-pyridyl ketone, propyl 4-pyridyl ketone) have been reported to show attractiveness to *Thrips tabaci, Frankliniella occidentalis* and *Thrips obscuratus* (Patent Document 6; Patent Document 7).

The above-mentioned chemicals may show attractiveness to different degrees depending on the type of *Thrips,* and have been reported to show species specificity.

However, high attractiveness does not show to noxious arthropods when using the above-mentioned attractants alone. Moreover, when using alone, there were cases in which high attractiveness does not show simultaneously to multiple species of noxious arthropods, and these attractants were inadequate for use as control methods against noxious arthropods (such as *Thrips*).

**Citation List**

**Patent Literature Document**

Patent Document 1: JP Hei 7-242506A
Patent Document 2: JP Hei 9-124409A
Patent Document 3: JP Hei 3-188005A
Patent Document 4: JP Hei 6-234603A
Patent Document 5: JP Hei 9-194303A
Patent Document 6: JP 2011-264654A
Patent Document 7: Japanese Patent Publication 2006-539420
Patent Document 8: WO 03/055309
Patent Document 9: WO 04/028256 A1
Patent Document 10: EP 2 572 579 A1
**Non-Patent literature Document**

Non-Patent Document 1: M. Hori, (2009) Journal of Applied Entomology, 133, 438-443.
Non-Patent Document 2: T. Fujii, M. Hori and K. Matsuda, (2010) Agricultural and Forest Entomology, 12, 99-105.
Non-Patent Document 3: D.A.J. Teulon, D.R. Penman and P.M.J. Ramakers, (1993) Journal of Economic Entomology, 86, 1405-1415.
Non-Patent Document 4: H.F. Brdsgaard, WPRS Bull., (1990) XI 11, 36.
Non-Patent Document 5: D.A.J. Teulon, B. Hollister and E.A. Cameron, (1993) IBOCIWPRS Bull., 16, 177-180.
Non-Patent Document 6: E.H. Koschier, W.J.D. Kogel and J.H. Visser, (2000) Journal of Chemical Ecology, 26, 2643-2655.
Non-Patent Document 7: D.R, Penman, G.O. Osborne, S.P. Worner, R.B. Chapman and G.F. McLaren, (1982) Journal of Chemical Ecology, 8, 1299-1303.
Non-Patent Document 8: T. Murai, T. Imai and M. Maekawa, (2000) Journal of Chemical Ecology, 26, 2557-2565.
Non-Patent Document 9: T. Imai, M. Maekawa and T. Murai, (2001) Applied Entomology and Zoology, 36, 475-478.
Non-Patent Document 10: J. C. Piñero et al., (2007), Entomologia Experimentalis et Applicata, 125(2), 185-194.
Non-Patent Document 11: D. A. J. Teulon et al., (2007), J. Agr. Food Chem., 55(15), 6198-6205.

**Summary of the Invention**

**Technical Problem**

As has been described above, the background art does not disclose substances that show a fixed level of action and effects in terms of attracting arthropods that are noxious to plants and are not necessarily satisfactory. Thus, an object of the present invention is to provide a means capable of attracting noxious arthropods more powerfully than the compositions described in the prior art references, more effectively controlling the behavior of noxious arthropod populations as a result thereof, and in particular, controlling and/or forecasting damage to plants caused by noxious arthropods.

**Solution Problem**

The inventors of the present invention conducted research for enhancing attracting effects on noxious arthropods in order to solve the above-mentioned object or problems. More specifically, as a result of examining the effects of the weight of various compounds showing significant attractiveness on noxious arthropods for the purpose of protecting plants by controlling noxious arthropods, it was clearly determined that the weight at which each compound shows significant attractiveness varies for each compound.

On the basis of this finding, when studies were conducted on chemicals and combinations thereof showing significant attractiveness on noxious arthropods, in the case of combining two or more types of known attractant compounds, synergistic effect was found to be demonstrated that far surpassed the case of using a single compound with respect to attracting noxious arthropods.

Thus, according to the present invention, a noxious arthropod attractant composition that solves the above-mentioned problems by containing a combination of p-anisaldehyde and ethyl nicotinate is provided.

**Advantageous Effects of Invention**

As has been previously described, since the composition of the present invention has a superior noxious arthropod attracting effect, it makes it possible to efficiently attract and capture noxious arthropods, efficiently inhibit the density of noxious arthropods that cause damage to crops, or predict the seasonal variations in emergence of noxious arthropods. The control of noxious arthropods by using the above-mentioned composition for the purpose of demonstrating such actions and effects makes it possible to effectively protect various types of plants.

In the present invention, the phrase "synergistic effect" refers to an action by which the attracting effect of a composition combining compounds selected from two or more types of plant-derived kairomones and analogues thereof on a specific noxious arthropod population is significantly higher than the effect expected of that composition. In general, a synergistic attracting effect expected when mixing two given types of active ingredient compounds and using for treatment is determined from Colby's equation indicated with the following Equation 1:

$$E = X + Y - (X * Y)/100 \qquad\qquad (1)$$

wherein,

X: attraction rate when treated with attractive compound A;
Y: attraction rate when treated with attractive compound B; and
E: attraction rate expected when treating by mixing attractive compound A and attractive compound B (expected attraction rate value).

In the case the attraction rates of two types of combined compounds are equal to or greater than the expected attraction rate value, the compounds are considered to show a synergistic attracting effect (refer to S.R. Colby, (1967) Weeds, 15, 20-22).

Similarly, a synergistic attracting effect expected when mixing three given types of attractive compounds and using for treatment is determined from Colby's equation indicated with the following Equation 2:

$$E = X + Y + Z - (X * Y + X * Z + Y * Z)/100 + X * Y * Z/10000$$
$$(2)$$

wherein,

X: attraction rate when treated with attractive compound A;
Y attraction rate when treated with attractive compound B;
Z: attraction rate when treated with attractive compound C; and
E: attraction rate expected when treating by mixing attractive compound A, attractive compound B and attractive compound C (expected attraction rate value).

In the case the attraction rates of three types of combined compounds are equal to or greater than the expected attraction rate value, the compounds are considered to show a synergistic attracting effect (refer to above reference).

This type of effect can be easily confirmed by carrying out laboratory bioassays or field testing. Thus, if it were possible to confirm this effect, then any ratios may be used for the ratios of a combination of compounds selected from two or more plant-derived kairomones and analogues thereof. However, in the case of a combination of two types of compounds, as claimed, although there are no particular limitations thereon, the weight ratio of the combination of two types of compounds can be 0.0999 to 99.9001:99.9001 to 0.0999, preferably 0.1996 to 99.8004:99.8004 to 0.1996, and more preferably 0.99 to 90.01:90.01 to 0.99.

The weight ratio of a combination of three types of compound is such that, in the case of a combination of three types of compounds, for example, although there are no particular limitations thereon, the weight ratio of the combination of three types of compounds can be 0.0998 to 99.8004:99.8004 to 0.0998:0.0998 to 99.8004, preferably 0.1992 to 99.6016:99.6016 to 0.1992:0.1992 to 99.6016, and more preferably 0.98039 to 98.03922:98.03922 to 0.98039: 0.98039 to 98.03922.

All chemicals used in the present invention are known compounds, and these compounds can be obtained from commercially available preparations or can be synthesized according to known methods. The composition of the present invention can be used by using a mixture of the above-mentioned two or more types of plant-derived kairomones and analogues thereof at the above-mentioned mixing ratios either as is or after preparing a solution thereof by dissolving in a suitable solvent such as hexane, xylene, acetone or dichloromethane, and impregnating a suitable support such as paper or cloth with this solution. In addition, the above-mentioned two or more types of attracting compounds can also be used by preparing separately and combining at the same location.

A trap that uses the composition of the present invention as an attracting source can be used by setting up at a location where noxious arthropods inhabit or in an area in which they fly, namely indoors, within a facility or outdoors.

The composition of the present invention can also be used as a method for forecasting damage to plants caused by noxious arthropods or as a method for suppressing that damage to a minimum.

The present invention can be used as a noxious arthropod attractant composition in which plant-derived kairomones or analogues thereof, are contained for the purpose of protecting plants by attracting noxious arthropods.

The composition of the present invention is a composition comprising p-anisaldehyde and ethyl nicotinate.

The composition can be a composition comprising three types of compounds, and examples thereof which can be used include:

1) p-anisaldehyde, ethyl nicotinate and methyl m-aminobenzoate,
2) p-anisaldehyde, ethyl nicotinate and methyl benzoate,
3) p-anisaldehyde, ethyl nicotinate and o-aminoacetophenone,
4) p-anisaldehyde, ethyl nicotinate and citronellol,
5) p-anisaldehyde, ethyl nicotinate and methyl o-toluate,
6) p-anisaldehyde, ethyl nicotinate and methyl anthranilate,
36) p-anisaldehyde, ethyl nicotinate and geraniol,
43) p-anisaldehyde, ethyl nicotinate and $\alpha$-hexylcinnamaldehyde,
44) p-anisaldehyde, ethyl nicotinate and nerol,
45) p-anisaldehyde, ethyl nicotinate and linalool, and
91) p-anisaldehyde, benzaldehyde, ethyl nicotinate.

The composition can be a composition comprising four types of plant-derived kairomones and analogues thereof, and examples thereof which can be used include:

1) a composition composed of p-anisaldehyde, ethyl nicotinate, methyl m-aminobenzoate and methyl benzoate,
2) a composition composed of p-anisaldehyde, ethyl nicotinate, methyl m-aminobenzoate and o-anisidine,
3) a composition composed of p-anisaldehyde, ethyl nicotinate, methyl m-aminobenzoate and o-aminoacetophenone,
4) a composition composed of p-anisaldehyde, ethyl nicotinate, methyl benzoate and o-anisidine,
5) a composition composed of p-anisaldehyde, ethyl nicotinate, methyl benzoate and o-aminoacetophenone,
6) a composition composed of p-anisaldehyde, ethyl nicotinate, o-anisidine and o-aminoacetophenone,
16) a composition composed of p-anisaldehyde, benzaldehyde, ethyl nicotinate and methyl m-aminobenzoate,
17) a composition composed of p-anisaldehyde, benzaldehyde, ethyl nicotinate and methyl benzoate,
18) a composition composed of p-anisaldehyde, benzaldehyde, ethyl nicotinate and o-anisidine, and
19) a composition composed of p-anisaldehyde, benzaldehyde, ethyl nicotinate and o-aminoacetophenone.

The composition can be a composition comprising five types of plant-derived kairomones and analogues thereof, and examples thereof which can be used include:

2) a composition composed of p-anisaldehyde, ethyl nicotinate, methyl m-aminobenzoate, methyl benzoate and o-aminoacetophenone,
3) a composition composed of p-anisaldehyde, ethyl nicotinate, methyl m-aminobenzoate, o-anisidine and o-aminoacetophenone,
4) a composition composed of p-anisaldehyde, ethyl nicotinate, methyl benzoate, o-anisidine and o-aminoacetophenone,
6) a composition composed of p-anisaldehyde, ethyl nicotinate, methyl m-aminobenzoate, methyl benzoate and o-anisidine,
7) a composition composed of p-anisaldehyde, benzaldehyde, ethyl nicotinate, methyl m-aminobenzoate and methyl benzoate,
8) a composition composed of p-anisaldehyde, benzaldehyde, ethyl nicotinate, methyl m-aminobenzoate and o-anisidine,

9) a composition composed of p-anisaldehyde, benzaldehyde, ethyl nicotinate, methyl m-aminobenzoate and o-aminoacetophenone,

10) a composition composed of p-anisaldehyde, benzaldehyde, ethyl nicotinate, methyl benzoate and o-anisidine,

11) a composition composed of p-anisaldehyde, benzaldehyde, ethyl nicotinate, methyl benzoate and o-aminoacetophenone, and

12) a composition composed of p-anisaldehyde, benzaldehyde, ethyl nicotinate, o-anisidine and o-aminoacetophenone.

The composition can be a composition comprising six types of plant-derived kairomones, and examples thereof which can be used include:

1) a composition composed of p-anisaldehyde, ethyl nicotinate, methyl m-aminobenzoate, methyl benzoate, o-anisidine and
o-aminoacetophenone,

2) a composition composed of p-anisaldehyde, benzaldehyde, ethyl nicotinate, methyl m-aminobenzoate, methyl benzoate and
o-aminoacetophenone,

3) a composition composed of p-anisaldehyde, benzaldehyde, ethyl nicotinate, methyl m-aminobenzoate, o-anisidine and
o-aminoacetophenone,

4) a composition composed of p-anisaldehyde, benzaldehyde, ethyl nicotinate, methyl benzoate, o-anisidine and
o-aminoacetophenone, and

6) a composition composed of p-anisaldehyde, benzaldehyde, ethyl nicotinate, methyl m-aminobenzoate, methyl benzoate and o-anisidine.

The composition can be a composition comprising seven types of plant-derived kairomones and analogues thereof, and examples thereof which can be used include:

1) a composition composed of p-anisaldehyde, methyl anthranilate, ethyl nicotinate, methyl m-aminobenzoate, methyl benzoate, methyl o-toluate and o-aminoacetophenone,

2) a composition composed of p-anisaldehyde, methyl anthranilate, ethyl nicotinate, methyl m-aminobenzoate, methyl benzoate, citronellol and o-aminoacetophenone,

3) a composition composed of p-anisaldehyde, methyl o-toluate, ethyl nicotinate, methyl m-aminobenzoate, methyl benzoate, citronellol and o-aminoacetophenone,

4) a composition composed of p-anisaldehyde, benzaldehyde, ethyl nicotinate, methyl m-aminobenzoate, methyl benzoate, o-anisidine and o-aminoacetophenone,

5) a composition composed of p-anisaldehyde, benzaldehyde, ethyl nicotinate, methyl m-aminobenzoate, methyl benzoate, citronellol and o-aminoacetophenone,

6) a composition composed of p-anisaldehyde, benzaldehyde, ethyl nicotinate, methyl m-aminobenzoate, methyl benzoate, methyl o-toluate and o-aminoacetophenone,

7) a composition composed of p-anisaldehyde, benzaldehyde, ethyl nicotinate, methyl m-aminobenzoate, methyl benzoate, methyl anthranilate and o-aminoacetophenone,

8) a composition composed of p-anisaldehyde, benzaldehyde, ethyl nicotinate, o-anisidine, methyl benzoate, methyl o-toluate and o-aminoacetophenone,

9) a composition composed of p-anisaldehyde, benzaldehyde, ethyl nicotinate, o-anisidine, methyl benzoate, methyl anthranilate and o-aminoacetophenone,

10) a composition composed of p-anisaldehyde, benzaldehyde, ethyl nicotinate, o-anisidine, methyl benzoate, citronellol and
o-aminoacetophenone,

11) a composition composed of p-anisaldehyde, benzaldehyde, ethyl nicotinate, methyl m-aminobenzoate, methyl benzoate, nerol and o-aminoacetophenone,

12) a composition composed of p-anisaldehyde, benzaldehyde, ethyl nicotinate, methyl m-aminobenzoate, methyl benzoate, linalool and o-aminoacetophenone,

13) a composition composed of p-anisaldehyde, benzaldehyde, ethyl nicotinate, methyl m-aminobenzoate, methyl benzoate, $\alpha$-hexylcinnamaldehyde and o-aminoacetophenone,

14) a composition composed of p-anisaldehyde, benzaldehyde, ethyl nicotinate, o-anisidine, methyl benzoate, geraniol and o-aminoacetophenone, and

15) a composition composed of p-anisaldehyde, benzaldehyde, ethyl nicotinate, methyl m-aminobenzoate, methyl benzoate, geraniol and o-aminoacetophenone.

The composition can be a composition comprising eight types of plant-derived kairomones and analogues thereof, and examples thereof which can be used include:

1) a composition composed of p-anisaldehyde, citronellol, ethyl nicotinate, methyl m-aminobenzoate, methyl benzoate, o-anisidine, o-aminoacetophenone and methyl anthranilate,

2) a composition composed of p-anisaldehyde, citronellol, ethyl nicotinate, methyl m-aminobenzoate, methyl benzoate, o-anisidine, o-aminoacetophenone and methyl o-toluate,

3) a composition composed of p-anisaldehyde, methyl anthranilate, ethyl nicotinate, methyl m-aminobenzoate, methyl benzoate, o-anisidine, o-aminoacetophenone and methyl o-toluate,

4) a composition composed of p-anisaldehyde, benzaldehyde, ethyl nicotinate, methyl m-aminobenzoate, methyl benzoate, o-anisidine, o-aminoacetophenone and citronellol,

5) a composition composed of p-anisaldehyde, benzaldehyde, ethyl nicotinate, methyl m-aminobenzoate, methyl benzoate, o-anisidine, o-aminoacetophenone and methyl anthranilate,

6) a composition composed of p-anisaldehyde, benzaldehyde, ethyl nicotinate, methyl m-aminobenzoate, methyl benzoate, o-anisidine, o-aminoacetophenone and methyl o-toluate,

7) a composition composed of p-anisaldehyde, benzaldehyde, ethyl nicotinate, methyl m-aminobenzoate, methyl benzoate, o-anisidine, o-aminoacetophenone and nerol,

8) a composition composed of p-anisaldehyde, benzaldehyde, ethyl nicotinate, methyl m-aminobenzoate, methyl benzoate, o-anisidine, o-aminoacetophenone and $\alpha$-hexylcinnamaldehyde,

9) a composition composed of p-anisaldehyde, benzaldehyde, ethyl nicotinate, methyl m-aminobenzoate, methyl benzoate, o-anisidine, o-aminoacetophenone and linalool,

10) a composition composed of p-anisaldehyde, benzaldehyde, ethyl nicotinate, methyl m-benzoate, methyl benzoate, o-anisidine, o-aminoacetophenone and geraniol,

11) a composition composed of p-anisaldehyde, benzaldehyde, ethyl nicotinate, methyl anthranilate, methyl benzoate, o-anisidine, o-aminoacetophenone and geraniol,

12) a composition composed of p-anisaldehyde, benzaldehyde, ethyl nicotinate, methyl m-aminobenzoate, methyl benzoate, methyl anthranilate, o-aminoacetophenone and geraniol,

13) a composition composed of p-anisaldehyde, benzaldehyde, ethyl nicotinate, methyl o-toluate, methyl benzoate, o-anisidine, o-aminoacetophenone and geraniol, and

14) a composition composed of p-anisaldehyde, benzaldehyde, ethyl nicotinate, methyl m-aminobenzoate, methyl benzoate, o-methyl toluate, o-aminoacetophenone and geraniol.

The p-anisaldehyde, benzaldehyde, ethyl nicotinate, geraniol, linalool, nerol, citronellol, o-anisaldehyde, $\beta$-farnesene, methyl anthranilate, methyl benzoate, o-aminoacetophenone, o-anisidine, methyl m-aminobenzoate, methyl o-toluate, eugenol, 3-phenylpropylaldehyde, cinnamaldehyde, eucalyptol, squalene and $\alpha$-hexylcinnamaldehyde used are known compounds, and these compounds are obtained from commercially available preparations or are obtained by producing according to known methods.

The p-anisaldehyde, benzaldehyde, ethyl nicotinate, geraniol, linalool, nerol, citronellol, o-anisaldehyde, $\beta$-farnesene, methyl anthranilate, methyl benzoate, o-aminoacetophenone, o-anisidine, methyl m-aminobenzoate, methyl o-toluate, eugenol, 3-phenylpropylaldehyde, cinnamaldehyde, eucalyptol, squalene and $\alpha$-hexylcinnamaldehyde used are known to be chemicals and analogues thereof produced and released by plants.

Known attracting components may also be contained in the composition of the present invention as noxious arthropod attractants other than the chemicals described in the claims, examples of which include ethyl isonicotinate, methyl isonicotinate, propyl isonicotinate, isopropyl isonicotinate, ethyl 2-chloroisonicotinate, 4-(1,3-dioxolan-2-y) pyridine, di-isopropyl isonicotinamide, 4-formyl pyridine, methyl 4-pyridyl ketone, ethyl 4-pyridyl ketone, propyl 4-pyridyl ketone, neryl (S)-2-methylbutanoate, lavandulyl acetate, leaf alcohol, leaf aldehyde and leaf acetate.

The population of noxious arthropods can be investigated by counting the number of captured organisms. The need for control is judged based on estimated population density. A method for removing noxious arthropods provided by the present invention is required to capture a large number of noxious arthropods. Conversely, rapid control is not necessarily required in the case of the low density of noxious arthropods.

For example, the composition of the present invention can be set up in a trap. This type of trap is designed to as to release an effective amount of an attractant. The trap is set up at a location where noxious arthropods are present or are predicted to be present. The attractant attracts noxious arthropods to the trap. Subsequently, by setting up an insecticide in the trap that shows lethal effects on noxious arthropods, for example, noxious arthropods attracted into the trap can be eradicated. Alternatively, noxious arthropods can also be attracted and captured by inserting an adhesive sheet. The following describes examples of effective insecticidal active ingredients able to be incorporated with the composition of the present invention.

Effective insecticidal active ingredients:

o-ethyl o-4-nitrophenyl phenylphosphonothionate (EPN), acephate, isoxathion, isofenphos, isoprocarb, etrimfos, oxydeprofos, quinalphos, cadusafos, chlorethoxyfos, chlorpyrifos, chlorpyrifos-methyl, chlorofenvinphos, salithion, cyanophos, disulfoton, dimethoate, sulfprofos, diazinon, thiometon, tetrachlorvinphos, tebupirimfos, trichlorophon, naled, vamdothion, pyraclophos, pyridafenthion, pirimiphos-methyl, fenitrothion, fenthion, phenthoate, butathiofos, prothiofos, propaphos, profenofos, benclothiaz, phosalone, fosthiazate, malathion, methidathion, metolcarb, monocrotophos, fenobcarb (BMPC), 3,5-xylyl N-methylcarbamate (XMC), alanycarb, ethiofencarb, carbaryl, carbosulfan, carbofuran, xylylcarb, cloethocarb, thiodicarb, triazamate, pirimicarb, fenoxycarb, fenothiocarb, furathiocarb, propoxur, bendiocarb, benfuracarb, methomyl, acrinathrin, imiprothrin, ethofenprox, cycloprothrin, sigma-cypermethrin, cyhalothrin, cyfluthrin, cypermethrin, silafluofen, tefluthrin, deltamethrin, tralomethrin, fenvalerate, fenpropathrin, flucythrinate, fluvalinate, flufenoprox, fluproxyfen, profluthrin, beta-cyfluthrin, benfluthrin, permethrin, cartap, thiocyclam, bensultap, avermectin, emamectin-benzoate, chlorfluoazuron, cyromazine, diafenthiuron, dichlorvos, diflubenzuron, spynosyn, spiromesifen, teflubenzuron, tebufenozide, hydroprene, vaniliprole, pymetrozine, pyriproxyfen, fipronil, flufenoxuron, buprofezin, hexaflumuron, milbemycin, lufenuron, chlorphenapyr, pyridalyl, flufendiamide, SI-0009, metofluthrin, noviflumuron, dimefluthrin, cyflumetofen, pyrafluprole and pyriprole.

In addition, other insecticidal active ingredients or synergists (such as piperonyl butoxide, sesamex sulfoxide, MGK 264, N-decylimidazole, WARF-antiresistant, TBPT, TPP, IBP, PSCP, CH3I, t-phenylbutenone, diethyl maleate, DMC, FDMC, ETP or ETN) can be incorporated and suitably used with the composition of the present invention.

Examples of solid carriers used during formulation include fine powders or particulate matter composed of minerals such as kaolin clay, attapulgite clay, bentonite, montmorillonite, acid clay, pyrophyllite, talc, diatomaceous earth or calcite, natural organic matter such as powdered corn cob or walnut shells, synthetic organic matter such as urea, salts such as calcium carbonate or ammonium sulfate or synthetic inorganic matter such as synthetic water-containing silicon oxide, while examples of liquid carriers include aromatic hydrocarbons such as xylene, alkyl benzene or methyl naphthalene, alcohols such as 2-propanol, ethylene glycol, propylene glycol or ethylene glycol monoethyl ether, ketones such as acetone, cyclohexanone or isophorone, vegetable oils such as soybean oil or cottonseed oil, petroleum-based aliphatic hydrocarbons, esters, dimethylsulfoxide, acetonitrile and water.

Examples of surfactants include anionic surfactants such as alkyl sulfate ester salts, alkyl aryl sulfonates, dialkyl sulfosuccinates, polyoxyethylene alkyl aryl ether phosphate ester salts, lignin sulfonates or naphthalene sulfonate formaldehyde condensates, nonionic surfactants such as polyoxyethylene alkyl aryl ethers, polyoxyethylene alkyl polyoxypropylene block copolymers or sorbitan fatty acid esters, and cationic surfactants such as alkyl trimethyl ammonium salts.

Examples of other formulation assistants include water-soluble polymers such as polyvinyl alcohol or polyvinylpyrrolidone, polysaccharides such as gum arabic, alginic acid and salts thereof, carboxymethyl cellulose (CMC) or xanthan gum, inorganic matter such as aluminum magnesium silicate or alumina sol, preservatives, colorants and stabilizers such as isopropyl acid phosphate (PAP) or BHT.

The present invention with attracting and capturing noxious arthropods is able to protect plants from noxious arthropods (e.g., noxious arthropods such as noxious insects or noxious mites) that cause damage by feeding on or sapping the following plants.

Forecasting and control methods using the composition of the present invention can be used in arable land or non-arable land such as fields, rice paddies, lawns or orchards. In addition, the present invention can be used to control noxious arthropods in arable land where the "plants" exemplified below are cultivated without causing chemical damage to those plants:

agricultural crops: corn (*Zea mays*), rice (*Oryza sativa*), wheat (*Triticum aestivum*), barley (*Hordeum vulgare*), rye (*Secale cereale*), oats (*Avena sativa*), sorghum (*Sorghum bicolor* (L.) Moenchi), cotton (*Gossypium arboreum*), soybeans (*Glycine max*), peanuts (*Arachis hypogaea*), buckwheat (*Fagopyrum esculentum*), beets (*Beta vulgaris ssp. vulgaris*), rape (*Brassica rapa* var. *amplexicaulis*), sunflowers (*Helianthus annuus*), sugar cane (*Saccharum oficinarum*), tobacco (*Nicotiana tabacum*);
vegetables: vegetables of the Solanaceae family such as eggplants (*Solanum melongena*), tomatoes (*Solanum lycopersicum*), green peppers (*Capsicum annuum* var. *angulosum*), red peppers (*Capsicum annuum*) or potatoes (*Solanum tuberosum*), vegetables of the Cucurbitaceae family such as cucumbers (*Cucumis sativus*), squash (*Cucurbita maxima*), zucchini (*Cucurbita pepo*), watermelon (*Citrullus lanatus*) or muskmelon (*Cucumis melo*), vegetables of the Brassicaceae family such as Japanese white radishes (*Raphanus sativus* var. *longipinnatus*), turnips (*Brassica rapa* L. var. *glabra*), horseradish (*Armoracia rusticana*), kohlrabi (*Brassica oleracea* var. *gongylodes*), Chinese cabbage (*Brassica rapa* var. *pekinensis*), cabbage (*Brassica oleracea*), mustard (*Brassica juncea*), broccoli (*Brassica oleracea* var. *italica*), cauliflower (*Brassica oleracea* var. *botrytis*) or colza (*Brassica napus*), vegetables of the Asteraceae family such as burdock (*Arctium lappa*), garland chrysanthemum (*Glebionis coronaria*) or artichokes (*Cynara scolymus*), lettuce (*Lactuca sativa*), vegetables of the Liliceae family such as green onions (*Allium fistulosum*), onions (*Allium cepa*), garlic (*Allium sativum*) or asparagus (*Asparagus officinalis*), vegetables of the Umbelliferae family such as carrots (*Daucus carota*), parsley (*Petroselinum neapolitanum*), celery (*Apium graveolens* var. *dulce*) or parsnips (*Pastinaca sativa*), vegetables of the Chenopodiaceae family such as spinach (*Spinacia oleracea*) or chard (*Beta vulgaris* var. *cicla*), vegetables of the Labiatae family such as perilla (*Perilla frutescens* var. *crispa*), mint (*Mentha piperita*) or basil (*Ocimum basilicum*), strawberries (*Fragaria ananassa* Duchesne), sweet potatoes (*Ipomoea batatas*), Japanese yams (*Dioscorea japonica*) and taro (*Colocasia esculenta*);

fruits: pome fruits (apples (*Malus pumila*), pears (*Pyrus communis*), Japanese pears (*Pyrus pyrifolia* var. *culta*), Chinese quince (*Chaenomeles sinensis*), marmelo quince (*Cydonia oblonga*)), stone fruits (peaches (*Amygdalus persica*), Japanese plums (*Prunus salicina*), nectarines (*Amygdalus persica* var. *nectarina*), plums (*Prunus mume*), cherries (*Cerasus avium*), apricots (*Prunus armeniaca*), prunes (*Prunus armeniaca*)), citrus fruits (satsuma mandarins (*Citrus unshiu*), oranges (*Citrus sinensis*), lemons (*Citrus limon*), limes (*Citrus aurantifolia*), grapefruits (*Citrus paradisi*)), nuts (chestnuts (*Castanea crenata*), walnuts (*Juglans mandshurica* var. *sieboldiana*), hazelnuts (*Corylus avellana*), almonds (*Prunus dulcis*), pistachios (*Pistacia vera*), cashew nuts (*Anacardium occidentale*), macadamia nuts (*Macadamia integrifolia*)), berries (blueberries (*Vaccinium corymbosum*), cranberries (*Vaccinium macrocarpon*), blackberries (*Rubus fruiticosus*), raspberries (*Rubus idaeus*)), grapes (*Vitis labrusca*), persimmons (*Diospyros kaki* Thunberg), olives (*Olea europaea*), loquats (*Eriobotrya japonica*), bananas (*Ensete ventricosum*), coffee (*Coffea arabica*), nutmeg (*Phoenix dactylifera*), coconut palm (*Cocus nucifera*) and oil palm (*Elaeis olelfera*);

Non-fruit trees: tea (*Camellia sinensis*), mulberry (*Morus alba*), trees and shrubs (Satsuki azalea (*Rhododenron indicum*), camellia (*Camellia japonica*), hydrangea (*Hydrangea macrophylla*), sasanqua (*Camellia sasanqua*), Japanese star anise (*Illicium anisatum*), cherry (*Cerasus xyedoensis*), tulip tree (*Liriodendron tulipifera*), crape myrtle (*Lagerstroemia indica*), fragrant olive (*Osmanthus fragrans* var. *aurantiacus*)), roadside trees (ash (*Fraxinus japonica*), betula (*Betula platyphylla* var. *japonica*), dogwood (*Benthamidia florida*), eucalyptus (*Eucalyptus globulus*), ginkgo (*Gingko biloba*), lilac (*Syringa vulgaris*), maple (*Acer palmatum*), oak (*Quercus myrsinaefolia*), poplar (*Populus angulata*), Chinese redbud (*Cercis chinensis*), sweet gum (*Liquidambar formosana*), sycamore (*Platanus orientalis*), Japanese zelkova (*Zelkova serrata*), Japanese arborvitae (*Thuja standishii*), fir (*Abies firma*), Japanese hemlock (*Tsuga sieboldii*), juniper (*Juniperus rigida*), pine (*Pinus densiflora*), spruce (*Picea jezoensis* var. *hondoensis*), Japanese yew (*Taxus cuspidata*), elm (*Ulmus davidiana* var. *japonica*), Japanese horse chestnut (*Aesculus turbinata*)), sweet viburnum (*Viburnum odoratissimum* var. *awabuki*), yew plum pine (*Podocarpus macrophyllus*), cedar (*Cryptomeria japonica*), cypress (*Chamaecyparis obtuse spp.*), croton (*Codiaeum variegatum*), spindle tree (*Euonymus japonicus*) and photinia (*Photinia glabra*);

grasses: turf grasses (Japanese lawn grass (*Zoysia japonica*), manila grass (*Zoysia matrela*)), Bermuda grasses (Bermuda grass (*Cynodon dactylon*)), bent grasses (redtop grass (*Agrostis gigantea*), creeping bent grass (*Agrostis stolonifera*), colonial bent grass (*Agrostis capillaris*)), blue grasses (Kentucky bluegrass (*Poa pratensis*), montane grass (*Poa trivialis*)), fescue (fescue grass (*Festuca arundinacea*), chewing fescue (*Festuca rubra* L. var. *genuina*), creeping red fescue (*Festuca rubra* L. var. *commutata*)), rye grasses (darnel (*Lolium multiflorum*), rye grass (*Lolium perenne*)), orchard grass (*Dactylis glomerata*) and timothy grass (*Phleum pretense*);

other: flowering plants (rose (*Rosa spp.*), carnation (*Dianthus caryophyllus*), chrysanthemum (*Chrysanthemum morifolium chrysanthemum*), prairie gentian (*Eustoma russellianum*), common gypsophila (*Gypsophila spp.*), gerbera (*Gerbera Hybrids*), marigold (*Tagetes spp.*), salvia (*Salvia spp.*), petunia (*Petunia xhybrida*), verbena (*Verbena spp.*), tulip (*Tulipa gesneriana*), aster (*Callistephus chinensis*), gentian (*Gentiana scabra* var. *buergeri*), lily (*Lilium spp.*), pansy (*Viola* X *wittrockiana*), cyclamen (*Cyclamen spp.*), orchid (*Orchidaceae spp.*), lily of the valley (*Convallaria majalis*), lavender (*Lavender lavandula*), stock (*Matthiola incana*), kale (*Brassica oleracea* var. *acephala f. tricolor*), primula (*Primula spp.* alt.), poinsettia (*Euphorbia pulcherrima*), gladiola (*Gladiolus spp.*), cattleya (*Cattleya spp.*), daisy (*Bellis perennis*), cymbidium (*Cymbidium spp.*), begonia (*Begonia partita*)), biofuel plants (jatropha (*Jatropha curcas*), safflower (*Carthamus tinctorius*), camelinas (*Camelina sativa*), switch grass (*Panicum virgatum*), miscanthus (*Miscanthus sinensis*), canary grass (*Phalaris arundinacea*), Indian grass (*Arundo donax*), hemp (*Hibiscus cannabinus*), cassava (*Manihot esculenta*), willow (*Salicaceae spp.*)) and foliage plants.

Preferable examples of the above-mentioned plants include eggplant, tomato, green pepper, red pepper, cucumber, squash, zucchini, watermelon, muskmelon, Japanese white radish, turnip, Chinese cabbage, cabbage, mustard, broccoli, cauliflower, colza, burdock, garland chrysanthemum, artichoke, lettuce, green onion, onion, garlic, asparagus, carrot, parsley, celery, spinach, perilla, mint, basil, strawberry, sweet potato, Japanese yam and taro.

The above-mentioned "plants" may be plants to which resistance has been imparted by breeding methods using gene recombination technology or hybridization.

The composition of the present invention is used to control noxious arthropods of plants by applying to plants or plant growing areas. Here, examples of plants include plant stems and leaves, plant flowers, plant fruits, plant seeds and plant bulbs. Furthermore, here, a plant bulb refers to a discoid stem, bulbous stem, rhizome, tuber, tuberous root and rhizophore.

Examples of noxious arthropods against which the composition containing a noxious arthropod attractant according to the present invention shows control methods include those indicated below:

noxious arthropods of the superorder Exopterygota, order Hemiptera: Delphacidae such as *Laodelphax striatellus, Nilaparvata lugens* or *Sogatella furcifera,* Deltcephalidae such as *Nephotettix cincticeps* or *Nephotettix vierscens,* Aphididae such as *Aphis gossypii, Myzuspersicae, Brevicoryne brassicae, Macrosiphum euphorbiae, Aulacorthum solani, Rhopalosiphum padi* or *Toxoptera citricidus,* Pentatomidae such as *Nezara antennata, Riptortus clavetus, Leptocorisa chinensis, Eysarcoris parvus, Halyomorpha mista* or *Lyus lineolaris,* Aleyrodidae such as *Trialeurodes vaporariorum, Bemisia tabaci* or *Bemisia argentifolii,* Coccidae such as *Aonidiella aurantii, Comstockaspis perniciosa, Unaspis citri, Ceroplastes rubens* or *Icerya purchasi),* Tingitidae and Psyllidae;

noxious arthropods of the superorder Exopterygota, order Thysanoptera: Thysanoptera such as *Frankliniella occidentais*, *Thrips palmi, Scirtothrips dorsalis, Thrips tabaci, Frankliniella intonsa* or *Frankliniella fusca;*

noxious arthopods of the superorder Exopterygota, order Lepidoptera: Pyralidae such as *Chilo suppresses, Tryporyza incertulas, Cnaphalocrocis medinalis, Notarcha derogata, Plodia interpunctella, Ostrinia furnacalis, Ostrinia nubilaris, Hellula undalis* or *Pediasia teterrellus,* Noctuidae such as *Spodoptera litura, Spodoptera exigua, Pseudaletia separata, Mamestra brassicae, Agrotis ipsilon, Plusia nigrisigna, Trichoplusia spp., Heliothis spp.* or *Helicoverpa spp.,* Pieridae such as *Pieris rapae,* Tortricidae such as *Adoxophyes spp., Grapholita molesta, Leguminivora glycinivorella, Matsumuraeses azukivora, Adoxophyes orana fasciata, Adoxophyes sp., Homona magnanima, Archips fuscocupreanus* or *Cydia pomonella,* Gracillariidae such as *Caloptilia theivora* or *Phyllonorycter ringoneella,* Carposinidae such as *Carposina niponensis,* Lyonetiidae such as *Rionetia spp.,* Lymantriidae such as *Lymantria spp.* or *Euproctis spp.,* Immoidea such as *Plutella xylosypiella,* Gelechiidae such as *Pectinophora gossypiella* or *Phthorimaea operculella,* Arctiidae such as *Hyphantria cunea* and Tineidae such as *Tinea translucens;*

noxious arthropods of the superorder Endopterygota, order Diptera: Agromyzidae such as *Hylemya antiqua, Hylema platura, Agromyza oryzae, Hydrellia griseola, Chlorops oryzae* or *Liriomyza trifolii, Dacus cucurbitae* and *Ceratitis capitata;*

noxious arthropods of the superorder Endopterygota, order Coleoptera: *Epilachna vigintioctopunctata, Aulacophora femoralis, Phyllotreta striolata, Oulema oryzae, Echinocenemus squameus, Lissorhoptrus oryzophilus, Anthonomus grandis, Callosobruchus chinensis, Sphenophorus venatus, Popillia japonica, Anomala cuprea, Diabrotica spp., Leptinotarsa decemlineata* and *Agriotes spp.*;

noxious arthropods of the superorder Endopterygota, order Hymenoptera: *Athalia rosae, Acromyrmex spp.* and *Solenopsis spp.*;

noxious arthropods of the superorder Polyneoptera, order Orthoptera: *Gryllotalpa Africana, Oxya yezoensis* and *Oxya japonica*;

noxious arthropods of the order Acarina: Tetranychidae such as *Tetranychus urticae* or *Panonychus citri,* Eriophyidae such as *Aculopspelekassi,* Tarsonemidae such as *Polyphagotarsoanem us latus, Tenuipalpidae, Tuckerellidae,* Accipitridae such as *Tyrophagus putrescentiae,* Epidermoptidae such as *Dermatophagoides farinae* or *Dermatophagoides ptrenyssnus,* and Cheyletidae such as *Cheyletus eruditus, Cheyletus malccensis* or *Cheyletus moorei.*

Examples of noxious arthopods against which the composition containing a noxious arthropod attractant according to the present invention shows control methods particularly include noxious arthropods of the superorder Exopterygota, order Thysanoptera.

## Examples

The following provides a more detailed explanation of the present invention together with test examples indicating the effects and so forth thereof.

Test Example 1

Hexane solutions were prepared respectively containing single compounds selected from among p-anisaldehyde, benzaldehyde, ethyl nicotinate, geraniol, linalool, nerol, citronellol, methyl anthranilate, methyl benzoate, o-aminoacetophenone, o-anisidine, methyl m-aminobenzoate, methyl o-toluate and α-hexylcinnamaldehyde. Each single compound was prepared at five concentration levels consisting of 0.01 μg, 0.1 μg, 1 μg, 10 μg and 100 μg. After impregnating pieces of filter paper with these solutions, the filter paper was affixed on a plastic vial cap using adhesive tape and set up in a water trap containing a surfactant. After releasing 30 adult female *Frankliniella occidentalis* into an acrylic cage, the water trap containing the above-mentioned attractants was set up in the cage. 24 hours later, the number of *Frankliniella occidentalis* captured in the water trap was counted and the attraction rate was calculated using Equation 1. The results are shown in TABLE 1.

$$\text{Attraction rate} = (\text{No. of captured individuals in treatmnet} - \text{no. of captured individuals in untreatment}) * 100/(\text{total no. released per cage}) \qquad (1)$$

[TABLE 1]

TABLE 1 (for Reference)

| Compound | Amount | Attraction Rate |
|---|---|---|
| p-anisaldehyde | 100 μg | 36 |
| p-anisaldehyde | 10 μg | 30 |
| p-anisaldehyde | 1 μg | 23 |
| p-anisaldehyde | 0.1 μg | 23 |
| p-anisaldehyde | 0.01 μg | 17 |
| Benzaldehyde | 100 μg | 27 |
| Benzaldehyde | 10 μg | 30 |
| Benzaldehyde | 1 μg | 36 |
| Benzaldehyde | 0.1 μg | 33 |
| Benzaldehyde | 0.01 μg | 23 |
| Ethyl nicotinate | 100 μg | 43 |
| Ethyl nicotinate | 10 μg | 36 |
| Ethyl nicotinate | 1 μg | 30 |
| Ethyl nicotinate | 0.1 μg | 27 |
| Ethyl nicotinate | 0.01 μg | 13 |
| Geraniol | 100 μg | 27 |
| Geraniol | 10 μg | 33 |
| Geraniol | 1 μg | 30 |
| Geraniol | 0.1 μg | 17 |
| Geraniol | 0.01 μg | 10 |
| Nerol | 100 μg | 27 |
| Nerol | 10 μg | 30 |
| Nerol | 1 μg | 33 |
| Nerol | 0.1 μg | 33 |
| Nerol | 0,01 μg | 10 |
| Citronellol | 100 μg | 23 |
| Citronellol | 10 μg | 20 |
| Citronellol | 1 μg | 20 |

(continued)

| Compound | Amount | Attraction Rate |
|---|---|---|
| Citronellol | 0.1 μg | 20 |
| Citronellol | 0.01 μg | 7 |
| Linalool | 100 μg | 7 |
| Linalool | 10 μg | 13 |
| Linalool | 1 μg | 20 |
| Linalool | 0.1 μg | 13 |
| Linalool | 0.01 μg | 13 |
| Methyl anthranilate | 100 μg | 20 |
| Methyl anthranilate | 10 μg | 17 |
| Methyl anthranilate | 1 μg | 13 |
| Methyl anthranilate | 0.1 μg | 13 |
| Methyl anthranilate | 0.01 μg | 10 |
| Methyl benzoate | 100 μg | 36 |
| Methyl benzoate | 10 μg | 33 |
| Methyl benzoate | 1 μg | 27 |
| Methyl benzoate | 0.1 μg | 23 |
| Methyl benzoate | 0.01 μg | 7 |
| o- aminoacetophenone | 100 μg | 36 |
| o-aminoacetophenone | 10 μg | 30 |
| o-aminoacetophenone | 1 μg | 23 |
| o-aminoacetophenone | 0.1 μg | 17 |
| o-aminoacetophenone | 0.01 μg | 3 |
| o-anisidine | 100 μg | 40 |
| o-anisidine | 10 μg | 30 |
| o-anisidine | 1 μg | 20 |
| o-anisidine | 0.1 μg | 10 |
| o-anisidine | 0.01 μg | 6 |
| Methyl o-toluate | 100 μg | 23 |
| Methyl o-toluate | 10 μg | 20 |
| Methyl o-toluate | 1 μg | 17 |
| Methyl o-toluate | 0.1 μg | 13 |
| Methyl o-toluate | 0.01 μg | 3 |
| Methyl m-aminobenzoate | 100 μg | 40 |
| Methyl m-aminobenzoate | 10 μg | 33 |
| Methyl m-aminobenzoate | 1 μg | 27 |
| Methyl m-aminobenzoate | 0.1 μg | 10 |
| Methyl m-aminobenzoate | 0.01 μg | 3 |
| α-hexylcinnamaldehyde | 100 μg | 30 |

(continued)

| Compound | Amount | Attraction Rate |
|---|---|---|
| $\alpha$-hexylcinnamaldehyde | 10 $\mu$g | 30 |
| $\alpha$-hexylcinnamaldehyde | 1 $\mu$g | 33 |
| $\alpha$-hexylcinnamaldehyde | 0.1 $\mu$g | 27 |
| $\alpha$-hexylcinnamaldehyde | 0.01 $\mu$g | 13 |
| Control (hexane) | -- | 3 |

Test Example 2

Mixed hexane solutions were prepared respectively containing two types of compounds selected from among p-anisaldehyde, benzaldehyde, ethyl nicotinate, geraniol, linalool, nerol, citronellol, methyl anthranilate, methyl benzoate, o-aminoacetophenone, o-anisidine, methyl m-aminobenzoate, methyl o-toluate and $\alpha$-hexylcinnamaldehyde. The weight of each compound was adjusted to the weight that showed the highest attraction rate based on Test Example 1. After impregnating pieces of filter paper with the mixed solution of the two types of compounds, the filter paper was affixed on a plastic vial cap using adhesive tape and set up in a water trap containing a surfactant. After releasing 30 adult female *Frankliniella occidentalis* into an acrylic cage, the water trap containing the above-mentioned mixed attractants was set up in the cage. 24 hours later, the number of *Frankliniella occidentalis* captured in the water trap was counted and the attraction rate was calculated using Equation 1. In addition, hexane solutions were also prepared containing each of the single compounds at their respective prescribed concentrations for the sake of comparison, and those solutions were tested in the same manner. The results are shown in TABLE 2 (where the combination of p-anisaldehyde and ethyl nicotinate is according to the invention).

$$\text{Attraction rate} = (\text{No. of captured individuals in treatment} -$$
$$\text{no. of captured individuals in untreatment}) * 100/(\text{total no.}$$
$$\text{released per cage}) \qquad (1)$$

In general, a synergistic attracting effect expected when mixing two given types of attractive compounds and using for treatment is determined from Colby's equation indicated with the following Equation 2:

$$E = X + Y - (X * Y)/100 \qquad (2)$$

wherein,

X: attraction rate when treated with attractive compound A;
Y: attraction rate when treated with attractive compound B; and
E: attraction rate expected when treating by mixing attractive compound A and attractive compound B (expected attraction rate value).

[TABLE 2]

TABLE 2 (not according to invention, except for *)

| Combination (Amt. of Compounds) | | Attraction Rate | Expected Attraction Rate Value |
|---|---|---|---|
| Benzaldehyde (1 $\mu$g) | o-anisidine (100 $\mu$g) | 83 | 58 |
| Benzaldehyde (1 $\mu$g) | o-aminoacetophenone (100 $\mu$g) | 79 | 56 |

(continued)

| Combination (Amt. of Compounds) | | Attraction Rate | Expected Attraction Rate Value |
|---|---|---|---|
| Benzaldehyde (1 μg) | Methyl benzoate (100 μg) | 69 | 57 |
| o-anisidine (100 μg) | o-aminoacetophenone (100 μg) | 63 | 58 |
| o-anisidine (100 μg) | p-anisaldehyde (100 μg) | 66 | 62 |
| * p-anisaldehyde (100 μg) | Ethyl nicotinate (100 μg) | 66 | 60 |
| p-anisaldehyde (100 μg) | Methyl m-aminobenzoate (100 μg) | 62 | 58 |
| p-anisaldehyde (100 μg) | Methyl benzoate (100) | 69 | 55 |
| p-anisaldehyde (100 μg) | o-aminoacetophenone (100 μg) | 57 | 55 |
| p-anisaldehyde (100 μg) | α-hexylcinnamaldehyde (1 μg) | 61 | 53 |
| p-anisaldehyde (100 μg) | Geraniol (10 μg) | 58 | 53 |
| p-anisaldehyde (100 μg) | Nerol (1 μg) | 58 | 53 |
| p-anisaldehyde (100 μg) | Citronellol (100 μg) | 50 | 46 |
| p-anisaldehyde (100 μg) | Linalool (1 μg) | 50 | 44 |
| p-anisaldehyde (100 μg) | Methyl o-toluate (100 μg) | 51 | 46 |
| p-anisaldehyde (100 μg) | Methyl anthranilate (100 μg) | 53 | 44 |
| Ethyl nicotinate (100 μg) | Methyl m-aminobenzoate (100 μg) | 66 | 62 |
| Ethyl nicotinate (100 μg) | Methyl benzoate (100 μg) | 73 | 60 |
| Ethyl nicotinate (100 μg) | o-aminoacetophenone (100 μg) | 63 | 60 |
| Ethyl nicotinate (100 μg) | α-hexylcinnamaldehyde (1 μg) | 61 | 58 |
| Ethyl nicotinate (100 μg) | Geraniol (10 μg) | 62 | 58 |
| Ethyl nicotinate (100 μg) | Nerol (1 μg) | 62 | 58 |
| Ethyl nicotinate (100 μg) | Citronellol (100 μg) | 55 | 52 |
| Ethyl nicotinate (100 μg) | Linalool (1 μg) | 51 | 50 |
| Ethyl nicotinate (100 μg) | Methyl o-toluate (100 μg) | 54 | 52 |
| Ethyl nicotinate (100 μg) | Methyl anthranilate (100 μg) | 52 | 50 |
| Methyl m-aminobenzoate (100 μg) | Geraniol (10 μg) | 59 | 56 |
| Methyl m-aminobenzoate (100 μg) | Nerol (1 μg) | 58 | 56 |
| Methyl m-aminobenzoate (100 μg) | Citronellol (100 μg) | 52 | 50 |
| Methyl m-aminobenzoate (100 μg) | Linalool (1 μg) | 51 | 48 |
| Methyl m-aminobenzoate (100 μg) | Methyl anthranilate (100 μg) | 52 | 48 |
| Methyl benzoate (100 μg) | α-hexylcinnamaldehyde (1 μg) | 58 | 53 |
| Methyl benzoate (100 μg) | Geraniol (10 μg) | 55 | 53 |
| Methyl benzoate (100 μg) | Nerol (1 μg) | 55 | 53 |

(continued)

| Combination (Amt. of Compounds) | | Attraction Rate | Expected Attraction Rate Value |
|---|---|---|---|
| Methyl benzoate (100 $\mu$g) | Citronellol (100 $\mu$g) | 50 | 46 |
| Methyl benzoate (100 $\mu$g) | Linalool (1 $\mu$g) | 47 | 44 |
| Methyl benzoate (100 $\mu$g) | Methyl anthranilate (100 $\mu$g) | 46 | 44 |
| Geraniol (10 $\mu$g) | Methyl anthranilate (100 $\mu$g) | 43 | 42 |
| Nerol (1 $\mu$g) | Methyl anthranilate (100 $\mu$g) | 48 | 42 |
| Citronellol (100 $\mu$g) | Methyl anthranilate (100 $\mu$g) | 37 | 34 |
| Linalool (1 $\mu$g) | Methyl anthranilate (100 $\mu$g) | 35 | 31 |
| Ethyl nicotinate (100 $\mu$g) | -- | 43 | -- |
| o-anisidine (100 $\mu$g) | -- | 40 | -- |
| Methyl m-aminobenzoate (100 $\mu$g) | -- | 40 | -- |
| p-anisaldehyde (100 $\mu$g) | -- | 36 | -- |
| Benzaldehyde (1 $\mu$g) | -- | 36 | -- |
| o-aminoacetophenone (100 $\mu$g) | -- | 36 | -- |
| Methyl benzoate (100 $\mu$g) | -- | 36 | -- |
| $\alpha$-hexylcinnamaldehyde (1 $\mu$g) | -- | 33 | -- |
| Geraniol (10 $\mu$g) | -- | 33 | -- |
| Nerol (1 $\mu$g) | - | 33 | -- |
| Citronellol (100 $\mu$g) | -- | 23 | -- |
| Methyl o-toluate (100 $\mu$g) | -- | 23 | -- |
| Methyl anthranilate (100 $\mu$g) | -- | 20 | -- |
| Linalool (1 $\mu$g) | -- | 20 | -- |
| Control (hexane) | -- | 3 | |
| (* according to the invention) | | | |

Test Example 3

Mixed hexane solutions were prepared containing three types of compounds selected from among p-anisaldehyde, benzaldehyde, ethyl nicotinate, geraniol, linalool, nerol, citronellol, methyl anthranilate, methyl benzoate, o-aminoacetophenone, o-anisidine, methyl m-aminobenzoate, methyl o-toluate and $\alpha$-hexylcinnamaldehyde. The weight of each compound was adjusted to the weight that showed the highest attraction rate based on Test Example 1. After impregnating pieces of filter paper with the mixed solution of the three types of compounds, the filter paper was affixed on a plastic vial cap using adhesive tape and set up in a pan trap containing a surfactant. After releasing 30 adult female *Frankliniella occidentalis* into an acrylic cage, the water trap containing the above-mentioned mixed attractants was set up in the cage. 24 hours later, the number of *Frankliniella occidentalis* captured in the water trap was counted and the attraction rate was calculated using Equation 1. In addition, hexane solutions were also prepared containing each of the single agents at their respective prescribed concentrations for the sake of comparison, and those solutions were tested in the same manner. The results are shown in TABLE 3 (wherein the combination of p-anisaldehyde and ethyl nicotinate is according to the invention).

In general, a synergistic attracting effect expected when mixing three given types of attractive compounds and using for treatment is determined from Colby's equation indicated with the following Equation 3:

$$E = X + Y + Z - (X * Y + X * Z + Y * Z)/100 + X * Y * Z/10000 \quad (3)$$

wherein,

X: attraction rate when treated with attractive compound A;
Y: attraction rate when treated with attractive compound B;
Z: attraction rate when treated with attractive compound C; and
E: attraction rate expected when treating by mixing attractive compound A, attractive compound B and attractive compound C (expected attraction rate value).

[TABLE 3]

TABLE 3

| Combination (Amt. of Compounds) | | | Attraction Rate | Expected Attraction Rate Value |
|---|---|---|---|---|
| p-anisaldehyde (100 µg) | Ethyl nicotinate (100 µg) | Methyl m-aminobenzoate (100 µg) | 77 | 75 |
| p-anisaldehyde (100 µg) | Ethyl nicotinate (100 µg) | Methyl benzoate (100 µg) | 79 | 73 |
| p-anisaldehyde (100 µg) | Ethyl nicotinate (100 µg) | o-aminoacetophe none (100 µg) | 78 | 73 |
| p-anisaldehyde (100 µg) | Ethyl nicotinate (100 µg) | α-hexylcinnamal dehyde (1 µg) | 78 | 72 |
| p-anisaldehyde (100 µg) | Ethyl nicotinate (100 µg) | Geraniol (10 µg) | 79 | 72 |
| p-anisaldehyde (100 µg) | Ethyl nicotinate (100 µg) | Nerol (1 µg) | 74 | 72 |
| p-anisaldehyde (100 µg) | Ethyl nicotinate (100 µg) | Citronellol (100 µg) | 72 | 68 |
| p-anisaldehyde (100 µg) | Ethyl nicotinate (100 µg) | Linalool (1 µg) | 73 | 67 |
| p-anisaldehyde (100 µg) | Ethyl nicotinate (100 µg) | Methyl o-toluate (100 µg) | 73 | 68 |
| p-anisaldehyde (100 µg) | Ethyl nicotinate (100 µg) | Methyl anthranilate (100 µg) | 74 | 67 |
| * p-anisaldehyde (100 µg) | Methyl benzoate (100 µg) | Methyl m-aminobenzoate (100 µg) | 75 | 72 |
| * p-anisaldehyde (100 µg) | Methyl benzoate (100 µg) | o-aminoacetophe none (100 µg) | 77 | 70 |
| * p-anisaldehyde (100 µg) | Methyl benzoate (100 µg) | α-hexylcinnamal dehyde (1 µg) | 78 | 70 |
| * p-anisaldehyde (100 µg) | Methyl benzoate (100 µg) | Geraniol (10 µg) | 71 | 69 |
| * p-anisaldehyde (100 µg) | Methyl benzoate (100 µg) | Nerol (1 µg) | 72 | 69 |

(continued)

| Combination (Amt. of Compounds) | | | Attraction Rate | Expected Attraction Rate Value |
|---|---|---|---|---|
| * p-anisaldehyde (100 μg) | Methyl benzoate (100 μg) | Citronellol (100 μg) | 72 | 69 |
| * p-anisaldehyde (100 μg) | Methyl benzoate (100 μg) | Linalool (1 μg) | 71 | 64 |
| * p-anisaldehyde (100 μg) | Methyl benzoate (100 μg) | Methyl o-toluate (100 μg) | 70 | 63 |
| * p-anisaldehyde (100 μg) | Methyl benzoate (100 μg) | Methyl anthranilate (100 μg) | 67 | 64 |
| * p-anisaldehyde (100 μg) | Methyl benzoate (100 μg) | Benzaldehyde (1 μg) | 75 | 70 |
| * p-anisaldehyde (100 μg) | Methyl anthranilate (100 μg) | Methyl m-aminobenzoate (100 μg) | 67 | 65 |
| * p-anisaldehyde (100 μg) | Methyl anthranilate (100 μg) | Methyl benzoate (100 μg) | 65 | 63 |
| * p-anisaldehyde (100 μg) | Methyl anthranilate (100 μg) | o-aminoacetophe none (100 μg) | 64 | 61 |
| * p-anisaldehyde (100 μg) | Methyl anthranilate (100 μg) | α-hexylcinnamal dehyde (1 μg) | 64 | 61 |
| * p-anisaldehyde (100 μg) | Methyl anthranilate (100 μg) | Geraniol (10 μg) | 63 | 61 |
| * p-anisaldehyde (100 μg) | Methyl anthranilate (100 μg) | Nerol (1 μg) | 66 | 61 |
| * p-anisaldehyde (100 μg) | Methyl anthranilate (100 μg) | Citronellol (100 μg) | 58 | 56 |
| * p-anisaldehyde (100 μg) | Methyl anthranilate (100 μg) | Linalool (1 μg) | 58 | 54 |
| * Ethyl nicotinate (100 μg) | Methyl benzoate (100 μg) | Geraniol (10 μg) | 73 | 72 |
| * Ethyl nicotinate (100 μg) | Methyl benzoate (100 μg) | Nerol (1 μg) | 81 | 72 |
| * Ethyl nicotinate (100 μg) | Methyl benzoate (100 μg) | Citronellol (100 μg) | 71 | 68 |
| * Ethyl nicotinate (100 μg) | Methyl benzoate (100 μg) | Linalool (1 μg) | 70 | 67 |
| * Ethyl nicotinate (100 μg) | Methyl anthranilate (100 μg) | Benzaldehyde (1 μg) | 75 | 73 |
| * Ethyl nicotinate (100 μg) | Methyl anthranilate (100 μg) | Methyl m-aminobenzoate (100 μg) | 72 | 69 |
| * Ethyl nicotinate (100 μg) | Methyl anthranilate (100 μg) | Methyl benzoate (100 μg) | 71 | 67 |
| * Ethyl nicotinate (100 μg) | Methyl anthranilate (100 μg) | Geraniol (10 μg) | 72 | 65 |

(continued)

| Combination (Amt. of Compounds) | | | Attraction Rate | Expected Attraction Rate Value |
|---|---|---|---|---|
| * Ethyl nicotinate (100 μg) | Methyl anthranilate (100 μg) | Nerol (1 μg) | 71 | 65 |
| * Ethyl nicotinate (100 μg) | Methyl anthranilate (100 μg) | Citronellol (100 μg) | 63 | 60 |
| * Ethyl nicotinate (100 μg) | Methyl anthranilate (100 μg) | Linalool (1 μg) | 64 | 59 |
| * Ethyl nicotinate (100 μg) | Methyl anthranilate (100 μg) | o-anisidine (100 μg) | 65 | 60 |
| * Ethyl nicotinate (100 μg) | -- | -- | 43 | -- |
| * o-anisidine (100 μg) | -- | -- | 40 | -- |
| * Methyl m-aminobenzoate (100 μg) | -- | -- | 40 | -- |
| * p-anisaldehyde (100 μg) | -- | -- | 36 | -- |
| * Benzaldehyde (1 μg) | -- | -- | 36 | -- |
| * o-aminoacetophe none (100 μg) | -- | -- | 36 | -- |
| * Methyl benzoate (100 μg) | -- | -- | 46 | -- |
| * α-hexylcinnamal dehyde (1 μg) | -- | -- | 33 | -- |
| * Geraniol (10 μg) | -- | -- | 33 | -- |
| * Nerol (1 μg) | -- | -- | 33 | -- |
| * Citronellol (100 μg) | -- | -- | 23 | -- |
| * Methyl o-toluate (100 μg) | -- | -- | 23 | -- |
| * Methyl anthranilate (100 μg) | -- | -- | 20 | -- |
| * Linalool (1 μg) | -- | -- | 20 | -- |
| * Control (hexane) | -- | -- | 3 | -- |
| (* not according to the invention) | | | | |

Test Example 4

Mixed hexane solutions were prepared respectively containing two types of compounds selected from among *p*-anisaldehyde, benzaldehyde, ethyl nicotinate, geraniol, linalool, nerol, citronellol, methyl anthranilate, methyl benzoate, *o*-aminoacetophenone, *o*-anisidine, methyl *m*-aminobenzoate, methyl *o*-toluate and α-hexylcinnamaldehyde. The weight of each compound was adjusted to 1 μg. After impregnating pieces of filter paper (3 mm²) with the mixed solution of the two types of compounds, the filter paper was set up at the head of a plastic tube (length of 9 cm, 5 mm² in diameters). An adult *Tetranychus urticae* was released into the end of plastic tube. Among 10 minutes, the number of *T. urticae* contacted the filter paper was counted and the attraction rate was calculated using Equation 1. In addition, hexane solutions were also prepared containing each of the single compounds at their respective prescribed concentrations for the sake of comparison, and those solutions were tested in the same manner. The results are shown in TABLE 4.

$$\text{Attraction rate} = (\text{No. of contacted individuals in treatment} -$$

$$\text{no. of contacted individuals in untreatment}) * 100/(\text{repetition})$$

$$(1)$$

In general, a synergistic attracting effect expected when mixing two given types of attractive compounds and using for treatment is determined from Colby's equation indicated with the following Equation 2:

$$E = X + Y - (X * Y)/100 \qquad (2)$$

wherein,

X: attraction rate when treated with attractive compound A;
Y: attraction rate when treated with attractive compound B;
and
E: attraction rate expected when treating by mixing attractive compound A and attractive compound B (expected attraction rate value).

[TABLE 4]

TABLE 4 (not according to the invention)

| Combination | | Attraction Rate | Expected Attraction Rate Value |
|---|---|---|---|
| Benzaldehyde | o-anisidine | 75 | 42 |
| Benzaldehyde | o-aminoacetophenone | 65 | 58 |
| Ethyl nicotinate | Methyl o-toluate | 35 | 11 |
| Methyl benzoate | Linalool | 35 | 29 |
| Linalool | Nerol | 18 | 10 |
| Benzaldehyde | -- | 32 | -- |
| o-anisidine | -- | 15 | -- |
| o-aminoacetophenone | -- | 38 | -- |
| Ethyl nicotinate | -- | 15 | -- |
| Methyl o-toluate | -- | 15 | -- |
| Methyl benzoate | -- | 25 | -- |
| Linalool | -- | 5 | -- |
| Nerol | -- | 5 | -- |
| Control (hexane) | -- | 15 | -- |

Test Example 5

Mixed hexane solutions were prepared respectively containing two types of compounds selected from among *p*-anisaldehyde, benzaldehyde, ethyl nicotinate, geraniol, linalool, nerol, citronellol, methyl anthranilate, methyl benzoate, *o*-aminoacetophenone, *o*-anisidine, methyl *m*-aminobenzoate, methyl *o*-toluate and α-hexylcinnamaldehyde. The weight of each compound was adjusted to 100 μg. After impregnating pieces of filter paper with the mixed solution of the two types of compounds, the filter paper was affixed on a plastic vial cap using adhesive tape and set up in a water trap containing a surfactant. After releasing 20 adult *Drosophila melanogaster* into an acrylic cage, the water trap containing the above-mentioned mixed attractants was set up in the cage. 24 hours later, the number of *D. melanogaster* captured in the water trap was counted and the attraction rate was calculated using Equation 1. In addition, hexane solutions were also prepared containing each of the single compounds at their respective prescribed concentrations for the sake of comparison, and those solutions were tested in the same manner. The results are shown in TABLE 5.

$$\text{Attraction rate} = (\text{No. of captured individuals in treatment} -$$
$$\text{no. of captured individuals in untreatment}) * 100/(\text{total no.}$$
$$\text{released per cage}) \qquad (1)$$

In general, a synergistic attracting effect expected when mixing two given types of attractive compounds and using for treatment is determined from Colby's equation indicated with the following Equation 2:

$$E = \bar{X} + Y - (\bar{X} * \bar{Y})/100 \qquad (2)$$

wherein,

X: attraction rate when treated with attractive compound A;
Y: attraction rate when treated with attractive compound B; and
E: attraction rate expected when treating by mixing attractive compound A and attractive compound B (expected attraction rate value).

[TABLE 5]

TABLE 5 (not according to the invention)

| Combination | | Attraction Rate | Expected Attraction Rate Value |
|---|---|---|---|
| Benzaldehyde | o- anisidine | 28 | 10 |
| Benzaldehyde | o-aminoacetophenone | 43 | 15 |
| Benzaldehyde | Methyl benzoate | 33 | 10 |
| o-anisidine | p-anisaldehyde | 18 | 10 |
| p-anisaldehyde | Methyl benzoate | 13 | 10 |
| p-anisaldehyde | Geraniol | 28 | 24 |
| p-anisaldehyde | Nerol | 18 | 5 |
| Ethyl nicotinate | Methyl m-aminobenzoate | 78 | 10 |
| Ethyl nicotinate | Methyl benzoate | 33 | 10 |
| Ethyl nicotinate | o-aminoacetophenone | 23 | 15 |
| Ethyl nicotinate | $\alpha$-hexylcinnamaldehyde | 13 | 10 |
| Ethyl nicotinate | Nerol | 8 | 5 |
| Ethyl nicotinate | Citronellol | 8 | 5 |
| Ethyl nicotinate | Linalool | 33 | 5 |
| Ethyl nicotinate | Methyl o-toluate | 23 | 5 |
| Ethyl nicotinate | Methyl anthranilate | 33 | 10 |
| Methyl benzoate | $\alpha$-hexylcinnamaldehyde | 33 | 14 |
| Methyl benzoate | Nerol | 13 | 10 |
| Methyl benzoate | Citronellol | 38 | 10 |

(continued)

| Combination | | Attraction Rate | Expected Attraction Rate Value |
|---|---|---|---|
| Methyl benzoate | Linalool | 18 | 10 |
| Methyl benzoate | Methyl anthranilate | 18 | 14 |
| Citronellol | Methyl anthranilate | 13 | 10 |
| Linalool | Methyl anthranilate | 18 | 10 |
| Methyl m-aminobenzoate | Citronellol | 23 | 10 |
| Methyl m-aminobenzoate | Linalool | 33 | 10 |
| Methyl m-aminobenzoate | Methyl anthranilate | 18 | 14 |
| p-anisaldehyde | -- | 3 | -- |
| Benzaldehyde | -- | 3 | -- |
| Ethyl nicotinate | -- | 3 | -- |
| Methyl anthranilate | -- | 8 | -- |
| Methyl benzoate | -- | 8 | -- |
| o-aminoacetophenone | -- | 13 | -- |
| o-anisidine | -- | 8 | -- |
| Methyl m-aminobenzoate | -- | 8 | -- |
| Methyl o-toluate | -- | 3 | -- |
| $\alpha$-hexylcinnamaldehyde | -- | 8 | -- |
| Linalool | -- | 3 | -- |
| Nerol | -- | 3 | -- |
| Geraniol | -- | 23 | -- |
| Citronellol | -- | 3 | -- |
| Control (hexane) | -- | 3 | -- |

Test Example 6

Mixed hexane solutions were prepared respectively containing two types of compounds selected from among p-anisaldehyde, benzaldehyde, ethyl nicotinate, geraniol, linalool, nerol, citronellol, methyl anthranilate, methyl benzoate, o-aminoacetophenone, o-anisidine, methyl m-aminobenzoate, methyl o-toluate and $\alpha$-hexylcinnamaldehyde. The weight of each compound was adjusted to 1 $\mu$g. After impregnating pieces of filter paper (3 mm$^2$) with the mixed solution of the two types of compounds, the filter paper was affixed on a yellow sticky trap (1 cm$^2$). After releasing 10 adult *Thrips tabaci* into a plastic cup (150 ml), the yellow sticky trap containing the above-mentioned mixed attractants was set up at the side of the plastic cup. 24 hours later, the number of *T. tabaci* captured in the yellow sticky trap was counted and the attraction rate was calculated using Equation 1. In addition, hexane solutions were also prepared containing each of the single compounds at their respective prescribed concentrations for the sake of comparison, and those solutions were tested in the same manner. The results are shown in TABLE 6.

$$\text{Attraction rate} = (\text{No. of captured individuals in treatment} -$$
$$\text{no. of captured individuals in untreatment}) * 100/(\text{total no.}$$
$$\text{released per cup}) \qquad (1)$$

In general, a synergistic attracting effect expected when mixing two given types of attractive compounds and using for treatment is determined from Colby's equation indicated with the following Equation 2:

$$E = X + Y - (X * Y)/100 \qquad (2)$$

wherein,

X: attraction rate when treated with attractive compound A;
Y: attraction rate when treated with attractive compound B; and
E: attraction rate expected when treating by mixing attractive compound A and attractive compound B (expected attraction rate value).

[TABLE 6]

TABLE 6 (not according to invention, except for *)

| Combination | | Attraction Rate | Expected Attraction Rate Value |
|---|---|---|---|
| o-anisidine | p-anisaldehyde | 40 | 10 |
| * p-anisaldehyde | Ethyl nicotinate | 27 | 19 |
| p-anisaldehyde | $\alpha$-hexylcinnamaldehyde | 30 | 16 |
| p-anisaldehyde | Linalool | 30 | 10 |
| p - anisaldehyde | Methyl anthranilate | 20 | 19 |
| Ethyl nicotinate | Methyl m-aminobenzoate | 20 | 10 |
| Ethyl nicotinate | $\alpha$-hexylcinnamaldehyde | 30 | 16 |
| $\alpha$-hexylcinnamaldehyde | Geraniol | 10 | 7 |
| $\alpha$-hexylcinnamaldehyde | o-anisidine | 10 | 7 |
| $\alpha$-hexylcinnamaldehyde | Linalool | 40 | 7 |
| p-anisaldehyde | -- | 10 | -- |
| Ethyl nicotinate | -- | 10 | -- |
| Methyl anthranilate | -- | 10 | -- |
| o-anisidine | -- | 0 | -- |
| Methyl m-aminobenzoate | -- | 0 | -- |
| $\alpha$-hexylcinnamaldehyde | -- | 7 | -- |
| Linalool | -- | 0 | -- |
| Geraniol | -- | 0 | -- |
| Control (hexane) | -- | 0 | -- |
| (* according to the invention) | | | |

**Industrial Applicability**

According to the present invention, a composition for high-active controlling noxious arthropods, and a method capable of effectively monitoring and controlling noxious arthropods, can be provided.

**Claims**

1. A composition for synergistically attracting noxious arthropods which comprises a combination of p-anisaldehyde and ethyl nicotinate.

2. The composition according to claim 1, wherein the two types of compounds are combined at a ratio of 0.99 to 99.01:99.01 to 0.99 based on the weight ratio thereof.

3. The composition according to claim 1, wherein the two types of compounds are combined at a ratio of 0.1996 to 99.8004:99.8004 to 0.1996 based on the weight ratio thereof.

4. The composition according to claim 1, wherein the two types of compounds are combined at a ratio of 0.0999 to 99.9001:99.9001 to 0.0999 based on the weight ratio thereof.

5. The composition of claim 1, further comprising a compound selected from the group consisting of benzaldehyde, geraniol, linalool, nerol, citronellol, methyl anthranilate, methyl benzoate, o-aminoacetophenone, methyl m-aminobenzoate, methyl o-toluate, and $\alpha$-hexylcinnamaldehyde.

6. A non-therapeutic method for controlling and/or monitoring the noxious arthropods comprising using the composition according to any of claims 1 to 5 against noxious arthropods.


**Patentansprüche**

1. Zusammensetzung zum synergistischen Anlocken von schädlichen Arthropoden, welche eine Kombination aus p-Anisaldehyd und Ethylnicotinat enthält.

2. Zusammensetzung nach Anspruch 1, wobei die beiden Arten von Verbindungen kombiniert sind in einem Verhältnis von 0,99 bis 99,01:99,01 bis 0,99, bezogen auf das Gewichtsverhältnis davon.

3. Zusammensetzung nach Anspruch 1, wobei die beiden Arten von Verbindungen kombiniert sind in einem Verhältnis von 0,1996 bis 99,8004:99,8004 bis 0,1996, bezogen auf das Gewichtsverhältnis davon.

4. Zusammensetzung nach Anspruch 1, wobei die beiden Arten von Verbindungen kombiniert sind in einem Verhältnis von 0,0999 bis 99,9001:99,9001 bis 0,0999, bezogen auf das Gewichtsverhältnis davon.

5. Zusammensetzung nach Anspruch 1, des Weiteren umfassend eine Verbindung, ausgewählt aus der Gruppe, bestehend aus Benzaldehyd, Geraniol, Linalool, Nerol, Citronellol, Methylanthranilat, Methylbenzoat, o-Aminoacetophenon, Methylm-aminobenzoat, Methyl-o-toluat und $\alpha$-Hexylzimtaldehyd.

6. Nichttherapeutisches Verfahren zur Bekämpfung und/oder Überwachung der schädlichen Arthropoden, umfassend die Verwendung der Zusammensetzung nach einem der Ansprüche 1 bis 5 gegen schädliche Arthropoden.


**Revendications**

1. Composition pour attirer par synergie des arthropodes nuisibles qui comprend une combinaison de p-anisaldéhyde et de nicotinate d'éthyle.

2. Composition selon la revendication 1, dans laquelle les deux types de composés sont combinés selon un rapport de 0,99 à 99,01: 99,01 à 0,99 sur la base du poids total de ceux-ci.

3. Composition selon la revendication 1, dans laquelle les deux types de composés sont combinés selon un rapport de 0,1996 à 99,8004: 99,8004 à 0,1996 sur la base du poids total de ceux-ci.

4. Composition selon la revendication 1, dans laquelle les deux types de composés sont combinés selon un rapport de 0,0999 à 99,9001:99,9001 à 0,0999 sur la base du poids total de ceux-ci.

5. Composition selon la revendication 1, comprenant en outre un composé sélectionné à partir du groupe constitué par du benzaldéhyde, du géraniol, du linalool, du nérol, du citronellol, de l'anthranylate de méthyle, du benzoate de méthyle, de l'o-aminoacétophénone, du m-aminobenzoate de méthyle, de l'o-toluate de méthyle, et de l'a-hexyl cinnamaldéhyde.

**6.** Procédé non thérapeutique pour lutter contre et/ou surveiller les arthropodes nuisibles comprenant l'utilisation de la composition selon l'une quelconque des revendications 1 à 5 contre des arthropodes nuisibles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7242506 A
- JP 9124409 A
- JP 3188005 A
- JP 6234603 A
- JP 9194303 A
- JP 2011264654 A
- JP 2006539420 A
- WO 03055309 A
- WO 04028256 A1
- EP 2572579 A1

### Non-patent literature cited in the description

- **M. HORI.** *Journal of Applied Entomology,* 2009, vol. 133, 438-443
- **T. FUJII ; M. HORI ; K. MATSUDA.** *Agricultural and Forest Entomology,* 2010, vol. 12, 99-105
- **D.A.J. TEULON ; D.R. PENMAN ; P.M.J. RAMAKERS.** *Journal of Economic Entomology,* 1993, vol. 86, 1405-1415
- **H.F. BRDSGAARD.** *WPRS Bull.,* 1990, vol. XI (11), 36
- **D.A.J. TEULON ; B. HOLLISTER ; E.A. CAMERON.** *IBOCIWPRS Bull.,* 1993, vol. 16, 177-180
- **E.H. KOSCHIER ; W.J.D. KOGEL ; J.H. VISSER.** *Journal of Chemical Ecology,* 2000, vol. 26, 2643-2655
- **D.R, PENMAN ; G.O. OSBORNE ; S.P. WORNER ; R.B. CHAPMAN ; G.F. MCLAREN.** *Journal of Chemical Ecology,* 1982, vol. 8, 1299-1303
- **T. MURAI ; T. IMAI ; M. MAEKAWA.** *Journal of Chemical Ecology,* 2000, vol. 26, 2557-2565
- **T. IMAI ; M. MAEKAWA ; T. MURAI.** *Applied Entomology and Zoology,* 2001, vol. 36, 475-478
- **J. C. PIÑERO et al.** *Entomologia Experimentalis et Applicata,* 2007, vol. 125 (2), 185-194
- **D. A. J. TEULON et al.** *J. Agr. Food Chem.,* 2007, vol. 55 (15), 6198-6205
- **S.R. COLBY.** *Weeds,* 1967, vol. 15, 20-22